# EUROPÄISCHE PATENTSCHRIFT

(11) **EP 0 982 571 B1**
(45) Veröffentlichungstag und Bekanntmachung des Hinweises auf die Patenterteilung: **30.08.2006**
(21) Anmeldenummer: 99113828.0
(22) Anmeldetag: 15.07.1999
(51) Int. Cl.: G01G 19/12

(54) **Vorrichtung zum Erfassen des Gewichtes eines landwirtschaftlichen Anbaugerätes**
Apparatus for sensing the weight of an agricultural vehicle
Dispositif de détection du poids d'une machine agricole

(30) Priorität: 26.08.1998 DE 19838739
(43) Veröffentlichungstag der Anmeldung: 01.03.2000
(73) Patentinhaber: RAUCH LANDMASCHINENFABRIK GMBH, D-76547 Sinzheim (DE)
(72) Erfinder: Weisser, Thomas, 77815 Bühl (DE); Rauch, Norbert, 76547 Sinzheim (DE)
(74) Vertreter: Dipl.-Ing. Heiner Lichti Dipl.-Phys. Dr.rer.nat. Jost Lempert Dipl.-Ing. Hartmut Lasch

(56) Entgegenhaltungen:
- EP-A- 0 407 705
- EP-A- 0 625 696
- FR-A- 2 675 011
- FR-A- 2 677 119
- AUERNHAMMER H. ET AL.: "WIEGEMÖGLICHKEITEN IN DER SCHLEPPERDREIPUNKTHYDRAULIK" LANDTECHNIK,DE,VERLAG EDUARD F.BECKMANN KG. LEHRTE, HANNOVER, Bd. 43, Oktober 1988 (1988-10), Seiten 414-418, XP002168824
- STANZEL H: "SENSOREN FUR NEUE TRAKTORFUNKTIONEN" LANDTECHNIK,DE,VERLAG EDUARD F.BECKMANN KG. LEHRTE, HANNOVER, Bd. 44, 1989, Seiten 366-369, XP000053322 ISSN: 0023-8082

## Beschreibung

Die Erfindung betrifft eine Vorrichtung zum Erfassen des Gewichtes eines vom Dreipunktgestänge eines Traktors aufgenommenen Anbaugerätes mit einem Geräterahmen und einem Zwischenrahmen, an dem der Oberlenkerbolzen und die von den Fanghaken der Unterlenker untergriffenen Unterlenkerbolzen befestigt sind und zwischen denen Kraftaufnehmer zur Gewichtserfassung angeordnet sind.

Vorrichtungen der vorgenannten Art dienen insbesondere bei Düngerstreuern zur Erfassung der zu Beginn der Streuarbeit aufgenommenen Düngermenge und der während der Streuarbeit ausgebrachten Streumenge, um durch Verrechnen mit der abgestreuten Wegstrecke und der Streubreite die tatsächlich ausgebrachte Streumenge pro Fläche zu erfassen und diese mit der gewünschten bzw. voreingestellten Streumenge zu vergleichen. Bei Abweichungen der gemessenen Ist-Streumenge von der eingestellten Soll-Streumenge können dann die Anbringorgane, z.B. Dosieröffnungen, an dem Düngerbehälter, nachgesteuert werden. Diese Gewichtserfassung im Anbauzustand hat den Vorteil, daß die effektiv ausgebrachte Streumenge unabhängig von den aktuellen Eigenschaften des ausgebrachten Düngers, z.B. dessen Rieselverhalten, feststellbar ist und diese Gewichtserfassung zudem während des Betriebs erfolgen kann.

Es sind eine Reihe unterschiedlicher Systeme bekannt, die eine solche Gewichtserfassung ermöglichen. So kann unmittelbar im Dreipunkt-Kraftheber des Schleppers ein Wiegesystem mit entsprechender Sensorik integriert sein (DE-A-38 20 757, 43 28 143, 43 28 144, DE-Zeitschrift "Landtechnik" Sonderheft 44 (1989), Seite 366 bis 369, DE-Zeitschrift "Landtechnik" Heft 10/88, Seite 414 bis 418). Dieses System, das traktorseitig integriert ist, hat den Vorteil der universellen Einsetzbarkeit für Anbaugeräte beliebiger Art. Es ist jedoch bisher nur an modernen Großtraktoren verwirklicht worden und an vorhandenen Traktoren nicht ohne weiteres nachrüstbar. Es ist ferner bekannt, das Gewicht mit einem Kraftaufnehmer am Oberlenkerbolzen oder einem der Unterlenkerbolzen aufzunehmen. Hierzu müssen sich sämtliche Bolzen in einer vertikalen Ebene befinden und wird dann nurdie horizontale Kraftkomponente gemessen (FR-A-2 677 119). Danach ist eine Messung in jeder beliebigen Betriebsstellung des Anbaugerätes nicht möglich. Bei einer anderen bekannten Bauart (EP-A-0 625 696) sind in die Ober- und Unterlenkerbolzen Sensoren integriert, die die Abbiegung der Bolzen in der Vertikalebene messen. Hierbei geht es nur um die Aufnahme des Leergewichtes des Anbaugerätes und des Füllgewichtes. Bei einer anderen bekannten Ausführung (FR-A-2 675 011) ist zwischen dem Oberlenkerbolzen und dem Anbaugerät ein Kraftaufnehmer integriert, ohne daß sich in diesem Dokument nähere Angaben über den Ort der Anordnung und die Art der Kraftaufnahme finden. Bei einer anderen bekannten Ausführung ist ein Wiegesystem im Anbaugerät integriert, indem auf einem dreipunktseitigen Zwischenrahmen ein Wiegerahmen aufgelagert ist (DE-A-35 39 825, DE-A-195 41 577, EP-A-0 823 197). Zum Wiegen muß die Arbeitsposition verlassen und der gesamte Hubweg durchfahren werden. Das System mit am Anbaugerät integriertem Wiegerahmen führt zu einer Gewichtserhöhung am Anbaugerät und zu einer ungünstigen Verlagerung des Schwerpunktes nach hinten. Soweit der Wiegerahmen unterhalb des Streugutbehälters liegt, wandert der Schwerpunkt zusätzlich nach oben. Dadurch werden Fahrsicherheit und Geländegängigkeit des Traktors beeinträchtigt bzw. muß die Zuladung reduziert werden.

Bei einer anderen bekannten Ausführung (DE-A-39 23 198 = EP-A-0 407 705) ist zwischen dem Geräterahmen und dem Dreipunktgestänge ein bockförmiger Zwischenrahmen angeordnet, der im Bereich der Unterlenker und des Oberlenkers über fahrtrichtungsparallele, horizontale Kraftaufnehmer mit dem Geräterahmen verbunden ist. Auch hierbei wird der Schwerpunkt des Anbaugerätes nach hinten verlagert und weist der bockartige Zwischenrahmen ein relativ hohes Gewicht auf. Zudem ist diese Konstruktion kostenaufwendig.

Der Erfindung liegt die Aufgabe zugrunde, bei minimaler Gewichtserhöhung und weitgehend unverändert bleibender Schwerpunktlage des Anbaugerätes eine preiswerte Vorrichtung zur Gewichtserfassung vorzuschlagen.

Diese Aufgabe wird erfindungsgemäß dadurch gelöst, daß der Geräterahmen über je einen an ihm befestigten und nur vertikale Kräfte aufnehmenden Kraftaufnehmer unmittelbar an den Unterlenkerbolzen abgestützt ist, und daß der Geräterahmen und der Zwischenrahmen über einen horizontal ausgerichteten Zugstab verbunden sind.

Bei der erfindungsgemäßen Ausbildung der Vorrichtung befinden sich die Kraftaufnehmer unmittelbar am Geräterahmen. Über die Kraftaufnehmer stützt sich der Geräterahmen und somit das gesamte Anbaugerät mit seiner Zuladung auf den Unterlenkerbolzen ab. Die Anordnung ist dabei so getroffen, daß die Kraftaufnehmer nur vertikale Kräfte aufnehmen. Die Unterlenkerbolzen sind Teil des Zwischenrahmens, der zusätzlich-nur noch durch einen horizontal ausgerichteten Zugstab mit dem Geräterahmen verbunden ist, so daß in den Zwischenrahmen nur die Vertikalkomponente der vom Oberlenker aufgenommenen Zugkraft eingeleitet wird. Insgesamt ist eine extrem kurze Bauweise möglich, so daß der Schwerpunkt durch den Zwischenrahmen nicht oder nicht nennenswert nach hinten verlagert wird. Ferner ergibt sich eine kostengünstige Bauweise dadurch, daß nur zwei Kraftaufnehmer für die beiden Unterlenkeranschlüsse notwendig sind und die Unterlenkeranschlüsse selbst einen unteren Teil des Zwischenrahmens bilden, so daß der Zwischenrahmen weitgehend zwischen Unter- und Oberlenker angeordnet werden kann, ohne diese nach hinten zu überragen. Die erfindungsgemäß ausgebildete Vorrichtung hat schließlich den entscheidenden Vorteil, daß das Gewicht in jeder Hublage des Anbaugerätes fehlerlos erfaßt werden kann.

In vorteilhafter Ausführung greift der horizontal ausgerichtete Zugstab unterhalb des Oberlenkerbolzens am Zwischenrahmen an.

Die Aufnahme nur der vertikalen Kräfte an den Kraftaufnehmern kann auf verschiedene Weise verwirklicht werden. Beispielsweise können die Unterlenkerbolzen in den Kraftaufnehmern sitzen und diese nur die vertikalen Scherkräfte aufnehmen. Stattdessen können die Kraftaufnehmer auf den Unterlenkerbolzen aufliegen, wobei auf den Unterlenkerbolzen vorzugsweise ballige Buchsen angeordnet sind, auf denen die Kraftaufnehmer punktförmig aufliegen, womit die Gewähr gegeben ist, daß nur vertikale Kräfte von den Kraftaufnehmern registriert werden.

Vorzugsweise sind die Unterlenkerbolzen über eine starre Traverse verbunden, die Teil des Zwischenrahmens ist und die Biege- und Torsionsmomente an den Unterlenkerbolzen aufnimmt. Auf diese Weise ist sichergestellt, daß diese Momente nicht in die Kraftaufnehmer eingetragen werden.

Die Traverse kann jochartig ausgebildet sein, um zwischen den Unterlenkerbolzen einerseits einen Freiraum zu schaffen, andererseits eine biegesteife Ausführung zu erhalten.

In weiterhin vorteilhafter Ausführung sind die Kraftaufnehmer zwischen Laschen am Geräterahmen eingespannt und stützen sich mit ihren die Laschen überragenden Enden auf den Unterlenkerbolzen ab.

Bei der Ausführungsform mit den Unterlenkerbolzen aufliegenden Kraftaufnehmern sind die Unterlenkerbolzen weiterhin über je einen Lenker, der die Horizontal- und Querkräfte aufnimmt, mit dem Geräterahmen verbunden. Dadurch läßt sich in besonders einfacher Weise eine punktförmige Auflage der Kraftaufnehmer auf den Buchsen an den Unterlenkern und somit nur eine Übertragung vertikaler Kräfte auf die Kraftaufnehmer verwirklichen.

In weiterhin bevorzugter Ausführung ist vorgesehen, daß auf den Unterlenkerbolzen ballige Lagerkörper für die Auflage auf den Fanghaken der Unterlenker angeordnet sind. Diese Lagerkörper sind vorzugsweise über Wälz- oder Leitlager auf den Unterlenkerbolzen gelagert. Dabei muß stets Vorsorge getroffen sein, daß die Unterlenker keinen Kontakt mit dem Geräterahmen erhalten.

Auf diese Weise werden die beim Anheben und Absenken des Anbaugerätes an dem Unterlenkerbolzen zwangsläufig auftretenden Drehmomente in den Lagerkörpern aufgenommen und nicht auf die Unterlenkerbolzen und damit auch nicht auf die Kraftaufnehmer übertragen.

Eine besonders einfache und kostengünstige Ausführung des Zwischenrahmens ergibt sich gemäß einer Ausführungsform dadurch, daß die jochartige Traverse aus einem aufrecht stehenden Blechteil gebildet ist und mit zwei senkrecht dazu befestigten Blechstützen, die jeweils von einem Unterlenkerbolzen zum Oberlenkerbolzen zusammengeführt sind, den Zwischenrahmen bilden.

Der Zwischenrahmen ist folglich aus einfachen, starkwandigen Blechteilen gebildet, die durch die heutige Laserbrenntechnik in Form und Materialaufwand optimal auf die Lastverhältnisse abgestimmt werden können. Durch die Anordnung der Blechstützen senkrecht zu dem jochartigen Blechteil ergibt sich mit einfachen Bauteilen ein verwindungssteifer Zwischenrahmen.

In weiterhin vorteilhafter Ausführung ist der Zugstab an dem Geräterahmen horizontal justierbar und mittels eines Steckbolzens am Zwischenrahmen lösbar befestigt. Der Zugstab wird bei der werksseitigen Montage justiert, um eventuelle Fertigungstoleranzen auszugleichen. Die horizontale Ausrichtung ist von besonderer Wichtigkeit, um auch bei Verlagerung des Schwerpunktes während des Betriebs, z.B. durch die Abnahme der Düngermenge im Behälter oder durch Verlagerung des Düngers im Behälter bei geneigtem Gelände, das Wiegeergebnis nicht zu beeinflussen.

Nachstehend ist die Erfindung anhand eines in der Zeichnung wiedergegebenen Ausführungsbeispiels beschrieben. In der Zeichnung zeigen:
- Fig. 1: eine schematische Seitenansicht des Krafthebers eines Traktors und eines Anbaugerätes in Form eines Düngerstreuers mit einer ersten Ausführungsform der Erfindung;
- Fig. 2: eine Vorderansicht des Düngerstreuers gemäß Fig. 1;
- Fig. 3: eine der Fig. 1 entsprechende Ansicht mit einem Kräftediagramm;
- Fig. 4: eine der Fig. 1 ähnliche Ansicht eines Düngerstreuers mit einer zweiten Ausführungsform der Erfindung;
- Fig. 5: eine der Fig. 2 entsprechende Ansicht der zweiten Ausführungsform und
- Fig. 6: eine Draufsicht auf ein Detail der Fig. 5.

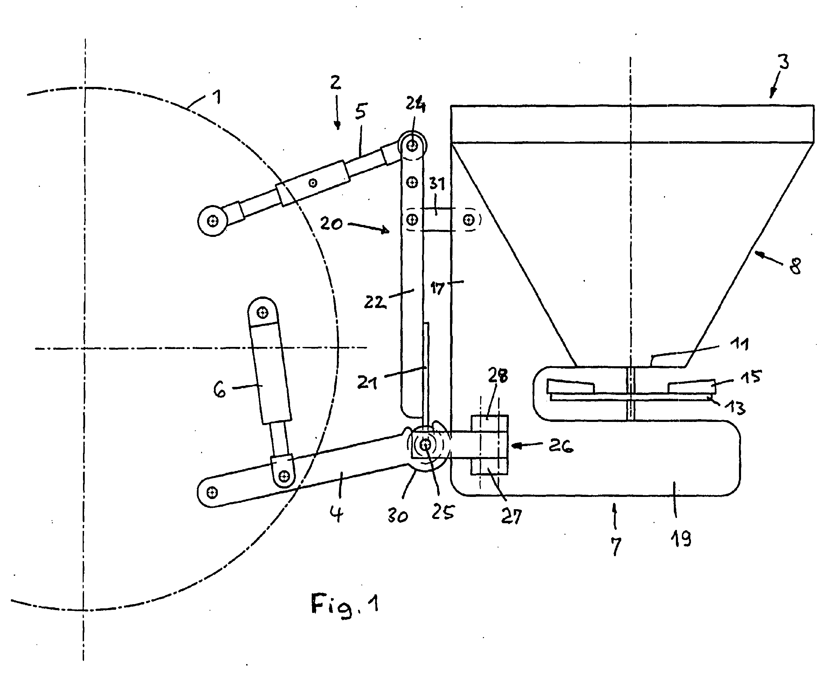

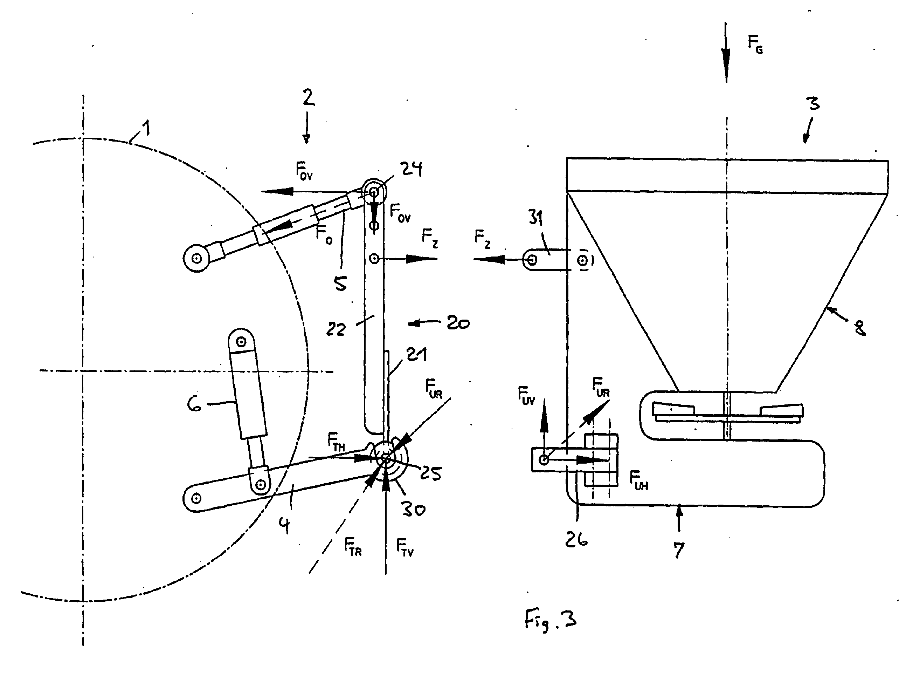

In den Fig. 1 und 3 ist vom Traktor lediglich ein Hinterrad 1 gezeigt. Am Traktor ist der Kraftheber 2 angelenkt, der das Anbaugerät 3 in Form eines Düngerstreuers aufnimmt. Der Kraftheber besteht aus zwei Unterlenkern 4 und einem längenverstellbaren Oberlenker 5, die beide am Traktor gelagert sind. Am Unterlenker 4 greift der Hubzylinder 6 an.

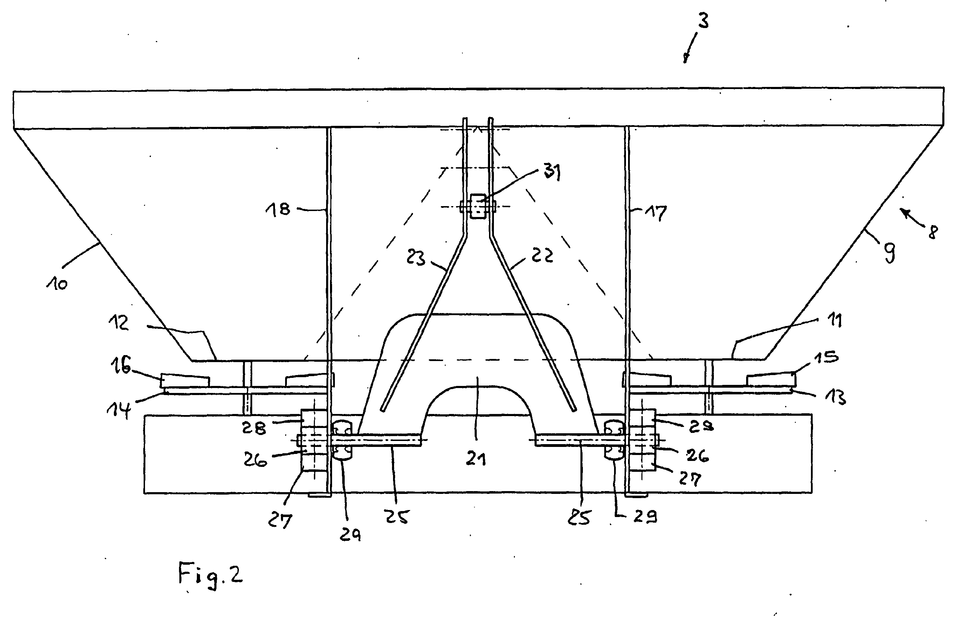

Das Anbaugerät 3 weist einen Geräterahmen 7 auf, der bei dem gezeigten Ausführungsbeispiel einen Düngemittelbehälter 8 aufnimmt, der, wie Fig. 2 zeigt, aus zwei trichterförmigen Behälterteilen 9 und 10 besteht. Jedes Behälterteil 9, 10 weist an seinem Boden 11, 12 eine nicht gezeigte, steuerbare oder regelbare Dosieröffnung auf, über die das Düngemittel auf darunter angeordnete, umlaufende Wurfscheiben 13, 14 mit Wurfschaufeln 15, 16 ausgebracht wird. Die Wurfscheiben 13, 14 können in jeder herkömmlichen Weise mechanisch, hydraulisch oder in anderer Weise angetrieben sein.

Der Geräterahmen 7 weist an der Vorderseite des Anbaugerätes vertikale Hauptträger 17, 18 auf, die beispielsweise aus starkwandigem Stahlblech bestehen. An deren untere Enden schließen, wie Fig. 1 zeigt, nach hinten reichende Tragarme 19 an, die die Wurfscheiben 13, 14 mit ihren Antrieben bzw. Getriebemitteln aufnehmen.

Der Geräterahmen 7 wird von den Unterlenkern 4 und dem Oberlenker 6 über einen Zwischenrahmen 20 aufgenommen, der zugleich ein Teil der Vorrichtung zur Gewichtserfassung bildet. Der Zwischenrahmen 20 besteht aus einer jochartigen Traverse 21, die beim wiedergegebenen Ausführungsbeispiel aus einem quer zur Fahrtrichtung senkrecht stehenden Blechteil gebildet ist, sowie aus zwei dazu wiederum senkrecht angeordneten, geknickten Blechstützen 22, 23, die mit dem jochartigen Blechteil 21 verschweißt sind und von ihrem unteren Ansatzpunkt zur Mitte hin zusammengeführt sind und in ihren oberen senkrechten Abschnitten zwei untereinander liegende Aufnahmen für die Oberlenkerbolzen 24 aufweisen.

An den beiden unteren Enden der jochartigen Traverse 21. sind die Unterlenkerbolzen 25 angeschweißt (Fig. 2), die sich nach außen erstrecken und in Kraftaufnehmern 26 sitzen. Die Kraftaufnehmer 26 sind zwischen je zwei Laschen 27, 28 an der Außenseite der Hauptträger 17, 18 des Geräterahmens 7 eingespannt und nehmen an ihren die Laschen überragenden Enden die Unterlenkerbolzen 25 auf. Die Kraftaufnehmer 26 nehmen ausschließlich vertikale Scherkräfte auf.

Auf den Unterlenkerbolzen 25 sitzen ballige Lagerkörper 29, die vorzugsweise über Wälzlager auf den Unterlenkerbolzen 25 gelagert sind. An den balligen Lagerkörpern 29 greifen die Fanghaken 30 (Fig. 1) der Unterlenker 4 an.

Zwischen dem Zwischenrahmen 20 und dem Geräterahmen 7 ist schließlich noch ein Zugstab 31 angeordnet, der einerseits unmittelbar unterhalb der Anschlüsse für den Oberlenkerbolzen 24 an den senkrechten Abschnitten der Blechstützen 22, 23, andererseits an geeigneter Stelle am Geräterahmen angreift. Der Zugstab 31 ist exakt horizontal ausgerichtet, wozu gegebenenfalls eine entsprechende Justiereinrichtung am Geräterahmen vorgesehen sein kann.

Die Gewichtskraft F_{G} des Anbaugerätes setzt sich zusammen aus dessen konstruktiver Masse und der Masse des im Behälter 8 befindlichen Düngemittels. Diese vom Dreipunktgestänge 2 aufzunehmende Last wird auf den Zwischenrahmen 20 übertragen, und zwar über den horizontalen Zugstab 31 einerseits und die Kraftaufnehmer 26 und die von Ihnen aufgenommenen Unterlenkerbolzen 25 andererseits. Die Resultierende F_{UR} am Unterlenkerbolzen 25 ergibt eine vertikale Reaktionskraft F_{UV} und eine horizontale Komponente F_{UH}, während der horizontale Zugstab 31 nur eine horizontale Komponente F_{Z} überträgt. Der Kraftaufnehmer 26 mißt nur die vertikale Komponente F_{UV}.

Die Resultierende F_{UR} am Unterlenkerbolzen 25 führt zu einer Resultierenden F_{TR} am Fanghaken 30 der Unterlenker 4, die sich wiederum in eine vertikale Komponente F_{TV} und eine horizontale Komponente F_{TH} zerlegen läßt. Der Oberlenker 5 nimmt die Kraft F_{O} auf, die am Oberlenkerbolzen 24 die in den Zwischenrahmen 20 abgeleitete vertikale Komponente F_{OV} und die horizontale Komponente F_{H} als Reaktionskräfte erzeugt.

Das Ausführungsbeispiel gemäß Fig. 4 bis 6 wird nachfolgend nur insoweit beschrieben, als es gegenüber der Ausführungsform nach Fig. 1 bis 3 unterscheidende Merkmale aufweist.

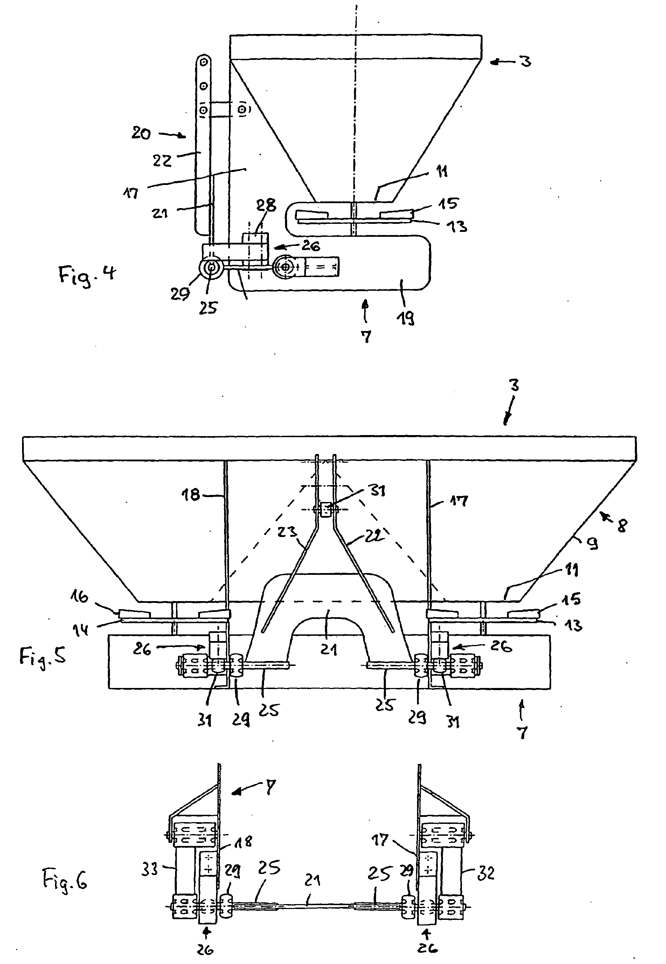

Bei diesem Ausführungsbeispiel sind an dem Geräterahmen 7 wiederum an dessen Hauptträgern 17, 18 die Kraftaufnehmer 26 eingespannt, die mit ihrem freien Ende auf den Unterlenkerbolzen 25 aufliegen. Um nur die vertikalen Kräfte aufzunehmen, sitzen auf den Unterlenkern 25 ballige Buchsen 31, auf denen sich folglich die Kraftaufnehmer 26 punktförmig abstützen (Fig. 5). Die äußeren Enden der Unterlenkerbolzen 25 sind ferner über Lenker 32, 33 mit dem Geräterahmen 7 verbunden. Die Lenker 32, 33 nehmen die Horizontal- und Querkräfte auf.

Mit den Kraftaufnehmern 26 läßt sich in jeder der gezeigten Ausführungen während des Betriebs und bei jeder Hublage des Dreipunktgestänges 2 das Gewicht des Anbaugerätes mit Zuladung feststellen, insbesondere aber auch die Abnahme des Gewichtes beim Ausbringen des Düngers. In Verbindung mit der Streubreite und der gefahrenen Strecke läßt sich die Istmenge errechnen und mit der Sollmenge abgleichen, wobei festgestellte Abweichungen durch entsprechende Steuerung oder Regelung der Ausbringorgane am Behälter 8 kompensiert werden.

## Patentansprüche

1. Vorrichtung zum Erfassen des Gewichtes eines vom Dreipunktgestänge (2) eines Traktors (1) aufgenommenen Anbaugerätes (3), wobei die Vorrichtung das Dreipunktgestänge (2) und das Anbaugerät (3) aufweist, das einen Geräterahmen (7) und einen Zwischenrahmen (20) aufweist, wobei an dem Zwischenrahmen (20) ein Oberlenkerbolzen (24) und die von Fanghaken (30) der Unterlenker (4) des Dreipunktgestänges (2) untergriffenen Unterlenkerbolzen (25) befestigt sind, und zwischen dem Geräterahmen (7) und dem Zwischenrahmen (20) Kraftaufnehmer (26) zur Gewichtserfassung angeordnet sind, **dadurch gekennzeichnet, daß** der Geräterahmen (7) über je einen an ihm befestigten und nur vertikale Kräfte (Fᵤᵥ) aufnehmenden Kraftaufnehmer (26) unmittelbar an den Unterlenkerbolzen (25) abgestützt ist, und daß der Geräterahmen (7) und der Zwischenrahmen (20) über einen horizontal ausgerichteten Zugstab (31) verbunden sind.

2. Vorrichtung nach Anspruch 1, **dadurch gekennzeichnet, daß** der horizontal ausgerichtete Zugstab (31) unterhalb des Oberlenkerbolzens (24) angeordnet ist.

3. Vorrichtung nach Anspruch 1 oder 2, **dadurch gekennzeichnet, daß** die Unterlenkerbolzen (25) in den Kraftaufnehmern (26) sitzen.

4. Vorrichtung nach Anspruch 1 oder 2, **dadurch gekennzeichnet, daß** die Kraftaufnehmer (26) auf dem Unterlenkerbolzen (25) aufliegen.

5. Vorrichtung nach Anspruch 4, **dadurch gekennzeichnet, daß** die Kraftaufnehmer (26) über ballige Buchsen (31) auf den Unterlenkerbolzen (25) aufliegen.

6. Vorrichtung nach einem der Ansprüche 1 bis 5, **dadurch gekennzeichnet, daß** die Unterlenkerbolzen (25) über eine starre Traverse (21) verbunden sind, die die Biege- und Torsionsmomente an den Unterlenkerbolzen (25) aufnimmt und Teil des Zwischenrahmens (20) ist.

7. Vorrichtung nach Anspruch 6, **dadurch gekennzeichnet, daß** die Traverse (21) jochartig ausgebildet ist.

8. Vorrichtung nach einem der Ansprüche 1 bis 3, **dadurch gekennzeichnet, daß** die Kraftaufnehmer (26) zwischen Laschen (27) am Geräterahmen (7) eingespannt sind und sich mit ihren die Laschen überragenden Enden an den Unterlenkerbolzen (25) abstützen.

9. Vorrichtung nach Anspruch 4 oder 5, **dadurch gekennzeichnet, daß** die Unterlenkerbolzen (25) über je einen Lenker (32, 33), der die Horizontal- und Querkräfte aufnimmt, mit dem Geräterahmen (7) verbunden sind.

10. Vorrichtung nach einem der Ansprüche 1 bis 9, **dadurch gekennzeichnet, daß** auf den Unterlenkerbolzen (25) ballige Lagerkörper (29) für die Auflage auf den Fanghaken (30) der Unterlenker (4) angeordnet sind.

11. Vorrichtung nach Anspruch 10, **dadurch gekennzeichnet, daß** die Lagerkörper (29) über Wälz- oder Gleitlager auf den Unterlenkerbolzen (25) gelagert sind.

12. Vorrichtung nach einem der Ansprüche 1 bis 11, **dadurch gekennzeichnet, daß** die jochartige Traverse (21) aus einem aufrecht stehenden Blechteil gebildet ist und mit zwei senkrecht dazu befestigten Blechstützen (22, 23), die jeweils von einem Unterlenkerbolzen (25) zum Oberlenkerbolzen (24) zusammengeführt sind, den Zwischenrahmen (20) bilden.

13. Vorrichtung nach einem der Ansprüche 1 bis 12, **dadurch gekennzeichnet, daß** der Zugstab (31) an dem Geräterahmen (7) horizontal justierbar und mittels eines Steckbolzens am Zwischenrahmen (20) lösbar befestigt ist.

## Claims

1. Device for determining the weight of a mounted implement (3) received by a three-point linkage (2) of a tractor (1), the device having the three-point linkage (2) and the mounted implement (3), which has an implement frame (7) and an intermediate frame (20), an upper link pin (24) and the lower link pin (25) underengaged by the catch hook (30) of the lower link (4) of three-point linkage (2) being fixed to the intermediate frame (20), and between the implement frame (7) and intermediate frame (20) are provided force pickups (26) for weight determination purposes, **characterized in that** the implement frame (7) is directly supported on the lower link pin (25) by means of in each case one force pickup (26) fixed thereto and only picking up vertical forces (Fuv), and that the implement frame (7) and intermediate frame (20) are connected by means of a horizontally oriented tie bar (31).

2. Device according to claim 1, **characterized in that** the horizontally oriented tie bar (31) is positioned below the upper link pin (24).

3. Device according to claim 1 or 2, **characterized in that** the lower link pins (25) are located in the force pickups (26).

4. Device according to claim 1 or 2, **characterized in that** the force pickups (26) rest on the lower link pin (25).

5. Device according to claim 4, **characterized in that** the force pickups (26) rest via convex bushes (31) on the lower link pins (25).

6. Device according to one of the claims 1 to 5, **characterized in that** the lower link pins (25) are connected by means of a rigid crossbeam (21), which absorbs the bending and torsional moments on the lower link pins (25) and which is part of intermediate frame (20).

7. Device according to claim 6, **characterized in that** the crossbeam (21) has a yoke-like construction.

8. Device according to one of the claims 1 to 3, **characterized in that** the force pickups (26) are fixed between cover plates (27) on implement frame (7) and are supported on the lower link pins (25) with their ends projecting over the cover plates.

9. Device according to claim 4 or 5, **characterized in that** the lower link pins (25) are connected to the implement frame (7) by means of in each case one link (32, 33) which absorbs the horizontal and transverse forces.

10. Device according to one of the claims 1 to 9, **characterized in that** on the lower link pins (25) are located convex bearing boxes (29) for resting on the catch hook (30) of lower links (4).

11. Device according to claim 10, **characterized in that** the bearing boxes (29) are mounted on the lower link pins (25) by means of plain or antifriction bearings.

12. Device according to one of the claims 1 to 11, **characterized in that** the yoke-like crossbeam (21) is formed by an upright sheet metal part and forming the intermediate frame (20) with two sheet metal supports (22, 23) fixed vertically thereto and in each case joined by a lower link pin (25) to the upper link pin (24).

13. Device according to one of the claims 1 to 12, **characterized in that** the tie bar (31) is fixed in horizontally adjustable manner to the implement frame (7) and is detachably fixed by a cotter pin to intermediate frame (20).

## Revendications

1. Dispositif pour la saisie du poids d'un outil (3) porté par L'attelage trois points (2) d'un tracteur (1), le dispositif comportant l'attelage trois points (2) et l'outil (3), qui présente un cadre d'outil (7) et un faux-châssis (20), un axe (24) de bras de liaison supérieure et les axes (25) de bras inférieur sous lesquels viennent en prise des crochets d'attache (30) des bras inférieurs (4) de l'attelage trois points étant fixés au faux-châssis. (20), et des prises de force (26) étant disposées entre le cadre d'outil (7) et le faux-châssis (20) pour saisir le poids, **caractérisé en ce que** le cadre d'outil (7) prend appui en contact direct sur l'axe du bras inférieur (25) par l'intermédiaire à chaque fois d'une prise de force (26) fixée sur lui et qui n'enregistre que des forces verticales (Fᵤᵥ), et **en ce que** le cadre d'outil (7) et le faux-châssis (20) sont reliés entre eux par une barre de traction (31) orientée horizontalement.

2. Dispositif selon la revendication 1, **caractérisé en ce que** la barre de traction (31) orientée horizontalement est disposée en-dessous du bras de liaison supérieure (24).

3. Dispositif selon la revendication 1 ou 2, **caractérisé en ce que** les axes des bras inférieurs (25) sont logés dans les prises de force (26).

4. Dispositif selon la revendication 1 ou 2, **caractérisé en ce que** les prises de force (26) reposent sur l'axe du bras inférieur (25).

5. Dispositif selon la revendication 4, **caractérisé en ce que** les prises de force (26) reposent sur les axes des bras inférieurs (25) par des coussinets convexes.

6. Dispositif selon l'une quelconque des revendications 1 à 5, **caractérisé en ce que** les axes des bras inférieurs (25) sont reliés par une traverse (21) rigide absorbant les moments de flexion et de torsion au niveau des axes des bras inférieurs (25) et constituant une partie du faux-châssis (20).

7. Dispositif selon la revendication 6, **caractérisé en ce que** la traverse (21) est conformée en joug.

8. Dispositif selon l'une quelconque des revendications 1 à 3, **caractérisé en ce que** les prises de force (26) sont montées entre des éclisses (27) sur le cadre d'outil (7) et **en ce qu'**elles prennent appui sur les axes des bras inférieurs (25) par leurs extrémités dépassant les éclisses.

9. Dispositif selon la revendication 4 ou 5, **caractérisé en ce que** les axes des bras inférieurs (25) sont reliés au cadre d'outil (7) à chaque fois par un bras oscillant (32, 33) qui absorbe les forces horizontales et transversales.

10. Dispositif selon l'une quelconque des revendications 1 à 9, **caractérisé en ce que** des paliers (29) convexes sont disposés sur les axes des bras inférieurs (25) pour servir de support aux bras inférieurs (4) sur les crochets d'attache (30).

11. Dispositif selon la revendication 10, **caractérisé en ce que** les paliers (29) sont montés sur les axes des bras inférieurs (25) par des paliers à roulement ou lisses.

12. Dispositif selon l'une quelconque des revendications 1 à 11, **caractérisé en ce que** la traverse (21) en forme de joug est constituée par une cornière en tôle et **en ce qu'**elle forme le faux-châssis (20) avec deux supports de tôle (22, 23) fixés perpendiculairement à celle-ci, reliés à chaque fois par un axe de bras inférieur (25) à l'axe de bras de liaison supérieur (24).

13. Dispositif selon l'une quelconque des revendications 1 à 12, **caractérisé en ce que** la barre de traction (31) peut être ajustée horizontalement sur le cadre d'outil (7) et est fixée détachable sur le faux-châssis (20) au moyen d'un axe embrochable.
